# EUROPEAN PATENT APPLICATION

(11) **EP 3 998 814 A1**
(43) Date of publication of application: **18.05.2022**
(21) Application number: 19936993.5
(22) Date of filing: 10.07.2019
(51) Int. Cl.: H04W 72/04

(54) **BASE STATION DEVICE, TERMINAL, AND TRANSMISSION METHOD**

(71) Applicant: NTT DOCOMO, INC., Chiyoda-Ku Tokyo 100-6150 (JP)
(72) Inventor: TAKAHASHI, Hideaki, Tokyo 100-6150 (JP); MATSUMURA, Yuki, Tokyo 100-6150 (JP)
(74) Representative: Hoffmann Eitle
(86) International application number: PCT/JP2019/027409
(87) International publication number: WO 2021/005763

(57) **Abstract**

A base station apparatus including: a transmission unit configured to transmit, to a terminal, configuration information designating one or more sounding reference signal resources, wherein the transmission unit transmits, to the terminal, a MAC control element designating spatial relation information for the one or more sounding reference signal resources

## Description

### [Technical Field]

The present invention relates to base station apparatus and a terminal in a wireless communication system.

### [Background Art]

In NR (New Radio) (also referred to as "5G"), a successor system to the Long Term Evolution (LTE), technologies that satisfy requirements such as high capacity systems, high data transmission rate, low delay, simultaneous connection of many terminals, low cost, and power saving and the like are being studied.

In a wireless communication system such as NR, a user equipment (which may be referred to as a UE (User Equipment)) transmits an SRS (Sounding Reference Signal) to a base station apparatus in order for the base station apparatus to obtain radio quality of UL (uplink).

In NR, when spatial relation (spatial relation) between a reference signal (reference RS) that serves as a reference such as SS/PBCH block, CSI-RS, etc. and a target SRS is configured to the user equipment, the user equipment transmits the SRS with an UL beam corresponding to the spatial relation (Non-Patent Document 1) .

By changing the spatial relation of the SRS, the user equipment can change the UL beam used for PUSCH transmission based on control information from the base station apparatus.

In the specification of Rel-15 such as Non-Patent Document 1, a spatial relation for a SRS resource is semi-static information configured by RRC. However, for only semi-persistent SRS, spatial relation can be changed by MAC CE (SP SRS Activation/Deactivation MAC CE) (Non-Patent Document 2).

### [Prior Art Documents]

### [Non-Patent Documents]

[Non-Patent Document 1] 3GPP TS 38.214 V15.5.0(2019-3)
[Non-Patent Document 2] 3GPP TS 38.321 V15.5.0(2019-03)
[Non-Patent Document 3] 3GPP TS 38.331 V15.5.1(2019-04)

### [Summary of Invention]

### [Problem to be Solved by the Invention]

In Rel-16, it is being considered to dynamically switch a spatial relation of aperiodic SRS by a MAC CE. Currently, only aperiodic SRS is covered, but periodic SRS may also be covered.

However, no specific method for dynamically specifying spatial relation for aperiodic SRS and periodic SRS has not yet been proposed.

The present invention has been developed in view of the foregoing, and an object is to provide a technique for dynamically specifying a spatial relation of a sounding reference signal to a terminal.

### [Means for Solving Problems]

According to the disclosed technique, there is provided a base station apparatus comprising:
a transmission unit configured to transmit, to a terminal, configuration information designating one or more sounding reference signal resources,
wherein the transmission unit transmits, to the terminal, a MAC control element designating spatial relation information for the one or more sounding reference signal resources.

### [Effects of the Invention]

The disclosed technique provides a technique that allows the terminal to dynamically specify spatial relation of the sounding reference signal.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a sequence diagram for explaining an operation of Example 1;
Fig.4A is a diagram illustrating an example of a specification modification of TS38.321 according to Example 1;
FIG. 4B is a diagram illustrating an example of a specification modification of TS38.321 according to Example 1;
FIG. 4C is a diagram illustrating an example of a specification modification of TS38.321 according to Example 1;
Fig. 5 is a sequence diagram for explaining an operation of Example 2;
Fig. 6 is a diagram illustrating an example of a specification modification of TS38.331 according to Example 2;
Fig. 7 is a diagram illustrating an example of a specification modification of TS38.331 according to Example 2;
Fig. 8 is a diagram illustrating an example of a specification modification of TS38.331 according to Example 2;
FIG. 9A is a diagram illustrating an example of a specification modification of TS38.321 according to Example 2;
FIG. 9B is a diagram illustrating an example of a specification modification of TS38.321 according to Example 2;
Fig. 10A is a diagram illustrating an example of a specification modification of TS38.321 according to Example 2;
Fig. 10B is a diagram illustrating an example of a specification modification of TS38.321 according to Example 2;
Fig. 11 is a diagram showing an example of a functional configuration of the base station apparatus 10 according to an embodiment of the present invention;
Fig. 12 is a diagram showing an example of a functional configuration of the user equipment 20 according to an embodiment of the present invention;
Fig. 13 is a diagram showing an example of a hardware configuration of the base station apparatus 10 or the user equipment 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. That is, a base station apparatus 10 and a user equipment 20 described below basically operate according to the existing NR specification, but as to the operation relating to the present invention, an operation modified from the operation according to the existing NR specification is performed. The present invention is applicable not only to NR but also to any wireless communication system.

In embodiments of the present invention, the duplex mode may be TDD (Time Division Duplex) mode, a FDD (Frequency Division Duplex) mode, or any other mode (e.g., Flexible Duplex, etc.).

In an embodiment of the present invention, a wireless parameter or the like being "configured" may mean that a predetermined value is preconfigured or that a wireless parameter notified by a base station apparatus 10 or a user equipment 20 is configured.

### (System Configuration)

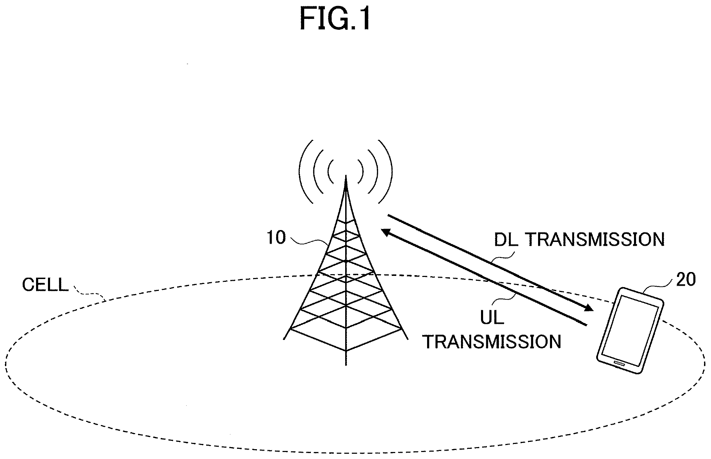

Fig. 1 is a diagram illustrating a wireless communication system according to an embodiment of the present invention. A wireless communication system in an embodiment of the present invention includes a base station apparatus 10 and a user equipment 20, as shown in FIG. 1. In FIG. 1, one base station apparatus 10 and one user equipment 20 are shown, but this is an example and a plurality of base station apparatuses 10 and a plurality of user equipments 20 may exist. The user equipment 20 may be referred to as a "terminal."

The Base station apparatus 10 is a communication device that provides one or more cells and performs wireless communication with the user equipment 20. The physical resources of the radio signal are defined in the time domain and the frequency domain, the time domain may be defined by OFDM symbols, and the frequency domain may be defined by subcarriers or resource blocks. The base station apparatus 10 transmits synchronization signals and system information to the user equipment 20. The synchronization signals are, for example, NR-PSS and NR-SSS. System information is also called broadcast information.

The base station apparatus 10 transmits one or more SRS resource sets (parameters representing SRS resource sets) to the user equipment 20 through RRC signaling (Non-Patent Document 3) . Each SRS resource set contains one or more SRS resources. Parameters for specifying SRS resources semistatically are srs-ResourceId, Number of SRS ports, Time domain behavior of SRS resource configuration, Slot level periodicity and slot level offset, Number of OFDM symbols, SRS bandwidth, Frequency hopping bandwidth, Defining frequency domain position and configurable shift, Cyclic shift, and Transmission comb value, Transmission comb offset, SRS sequence ID, and configuration of the spatial Relation between a reference RS and the target SRS, and the like.

The configuration of the spatial relation between a reference RS and the target SRS can be dynamically designated (switched) by a MAC CE as described in Examples 1 and 2 in this embodiment.

As shown in FIG. 1, the base station apparatus 10 transmits control information or data in DL (Downlink) to the user equipment 20 and receives control information or data in UL (Uplink) from the user equipment 20. Both the base station apparatus 10 and the user equipment 20 are capable of beam forming to transmit and receive signals. Also, both the base station apparatus 10 and the user equipment 20 can apply MIMO (Multiple Input Multiple Output) communication to DL or UL. Both the base station apparatus 10 and the user equipment 20 may also communicate by a CA (Carrier Aggregation) via a SCell (Secondary Cell) and a PCell (Primary Cell) .

The user equipment 20 is a communication device having a wireless communication function such as a smartphone, a cellular phone, a tablet, a wearable terminal, a communication module for M2M (Machine-to-Machine), or the like. As shown in FIG. 1, the user equipment 20 utilizes various communication services provided by the wireless communication system by receiving control information or data in DL from the base station apparatus 10 and transmitting control information or data in UL to the base station apparatus 10.

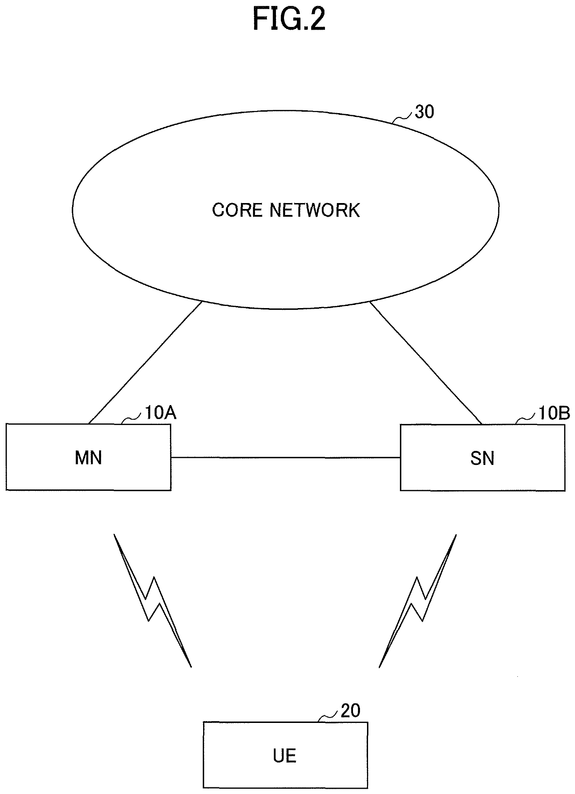

Fig. 2 shows an example of a configuration of a wireless communication system when NR-DC (NR-Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user equipment 20 communicates with both the base station apparatus 10A and the base station apparatus 10B.

The cell group provided by the Base station apparatus 10A that is an MN is called an MCG (Master Cell Group), and the cell group provided by the Base station apparatus 10B that is an SN is called an SCG (Secondary Cell Group).

Hereinafter, a specific example of a dynamic designation method of a spatial relation of an SRS according to an embodiment of the present invention will be described as Example 1 and Example 2. In Examples 1 and 2, a MAC CE (MAC control element) is used as a signal for dynamically specifying the spatial relation of the SRS, but a signal other than the MAC CE (MAC control element) may be used as a signal for dynamically specifying the spatial relation of the SRS (for example, a DCI transmitted by PDCCH may be used).

### (Example 1)

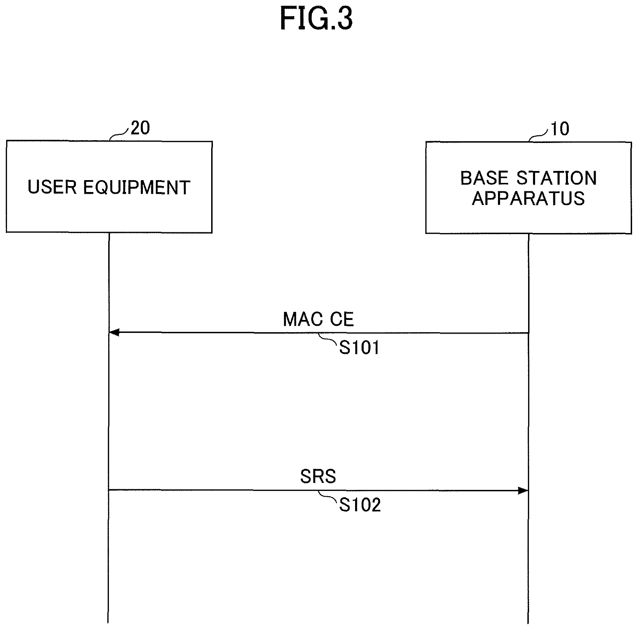

Fig. 3 is a sequence diagram for explaining an operation of Example 1. Before the time point of S101 of FIG. 3, an SRS resource set and an SRS resource are configured by SRS-Config (Non-Patent Document 3) of RRC transmitted from the base station apparatus 20 in the user equipment 20. The resource type of the SRS resource can be periodic or aperiodic. The resource type of the SRS resource may also be semi-persistent.

In S101, the base station apparatus 10 transmits a MAC CE (a novel MAC CE not existing in the prior art) to the user equipment 20.

The MAC CE includes an ID specifying an SRS resource set and spatial relation information for each SRS resource included in the specified SRS resource set.

The user equipment 20 that receives the MAC CE in S101 transmits a SRS based on the spatial relation information, specified by the MAC CE, corresponding to the SRS resource configured in the user equipment 20 in S102. Note that, "transmit SRS" may be replaced with "transmit SRS resource".

The MAC CE may specify activation/deactivation of spatial relation information for all SRS resources configured in S101, or the MAC CE may specify activation/deactivation of spatial relation information for a portion of all SRS resources configured in S101.

For example, when a MAC CE specifies an ID of a ssb-Index which is a reference as spatial relation information for a SRS resource configured by RRC to the user equipment 20, the user equipment 20 transmits the target SRS using the same spatial domain transmission filter as that used for receiving a SS/PBCH block of the ID. When a MAC CE specifies an ID of a csi-RS-Index which is a reference as spatial relation information, the user equipment 20 transmits a target SRS using the same spatial domain transmission filter as that used to receive a CSI-RS of the ID. When a MAC CE specifies an ID of a srs which is a reference as spatial relation information, the user equipment 20 transmits a target SRS using the same spatial domain transmission filter as that used to transmit the SRS of the ID. Note that "transmitting a SRS using a spatial domain transmission filter" may be replaced by "transmitting a SRS using an UL beam".

The SRS-Config of RRC can be used to configure the SRS-SpatialRelationInfo for each SRS Resource. However, in Example 1, configuration of the MAC CE in S101 is prioritized, and the user equipment 20 overwrites the configuration of the RRC with the configuration of the MAC CE.

The above description is an example of activation of spatial relation information. A sequence is executed in the same way as the sequence shown in Fig. 3 when the spatial relation information is deactivated.

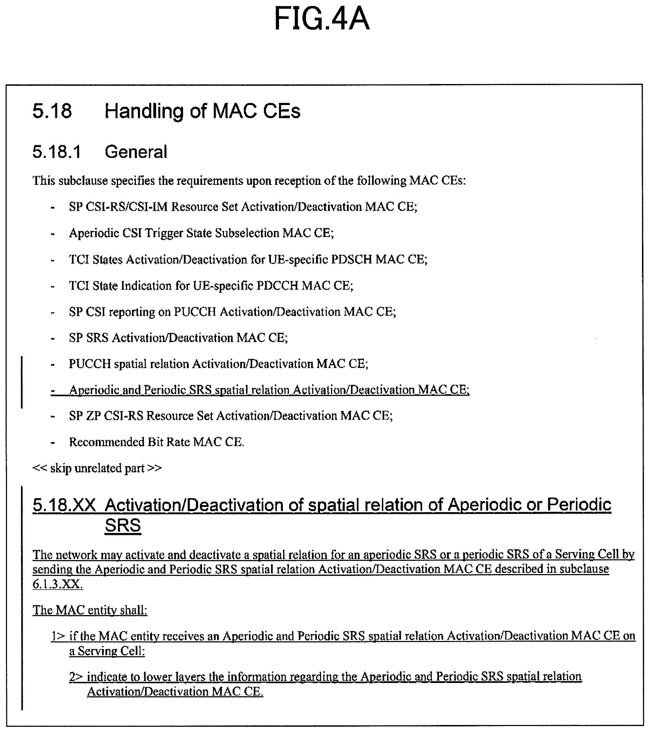

FIGS. 4A-4C show an example (referred to as "TS38.321 Modification Example 1") of the specification of Example 1 (in which the user equipment 20 operates in accordance with this specification) . FIGS. 4A-4C show changes (underlined portions are added) from Non-Patent Document 2 (3GPP TS 38.321 V15.5.0).

As shown in Fig. 4A, the MAC CE in Example 1 (Aperiodic and Periodic SRS Spatial Relation Activation/Deactivation MAC CE) is applicable to both Aperiodic SRS and Periodic SRS.

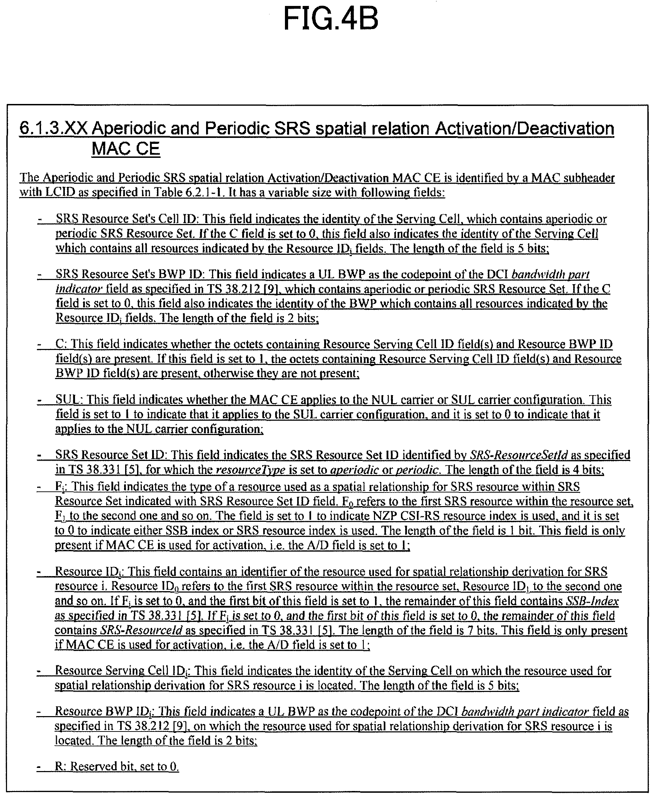

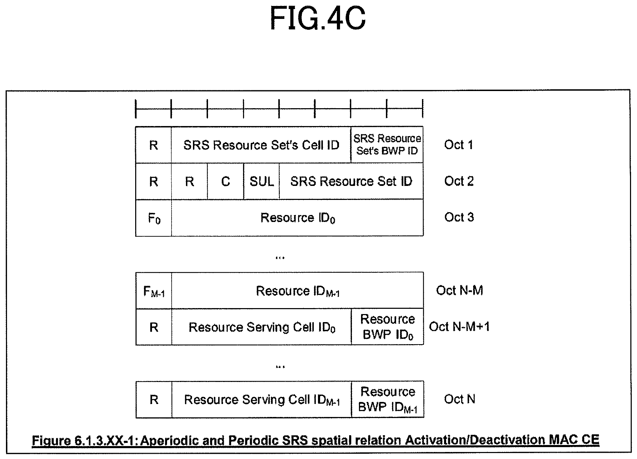

FIG. 4B shows a description of each field in the MAC CE shown in FIG. 4C. The contents of each field are shown in Fig. 4B, and main fields are outlined below.

As shown in Fig. 4B, the SRS Resource Set's Cell ID indicates an ID of a serving cell in which aperiodic or periodic SRS Resource Set is configured.

The SRS Resource Set's BWP ID indicates an ID of UL BWP for which aperiodic or periodic SRS Resource Set is configured.

The SRS Resource Set ID is a SRS Resource Set ID identified by SRS-Resource SetId. In SRS-ResourceSet, a resource type that is "aperiodic" or "periodic" is specified.

Fi indicates a type of spatial relation for a SRS resource in a SRS Resource Set specified by a SRS Resource Set ID. For example, F₁ corresponds to the second SRS resource in the SRS Resource Set. For example, if F₁ is 1, then Resource ID₁ represents a NZP CSI-RS resource index with spatial relation with the second SRS resource.

Resource IDi is a resource ID for deriving a spatial relationship for SRS resource i. If Fᵢ is 0, then the rest of this field contains a SSB-Index if the first bit of this field is 1, and the rest of this field contains SRS-ResourceId if the first bit of this field is 0. This field is present only if the MAC CE is used for activation.

Resource Serving Cell IDi is an ID of a serving cell where there is a resource used to derive spatial relation of a SRS resource i. Resource BWP IDᵢ is an ID of UL BWP for which a resource is present for deriving spatial relation of SRS resource i.

As described above, in the Example 1, the base station apparatus 10 transmits configuration information specifying one or more sounding reference signal resources to the user equipment 10. The base station apparatus 10 also transmits to the user equipment 20 a MAC control element specifying spatial relation information for a resource of the one or more sounding reference signals. The user equipment 20 receives these pieces of information from the base station apparatus 10 and transmits a sounding reference signal using a spatial domain transmission filter corresponding to the spatial relation information.

### (Example 2)

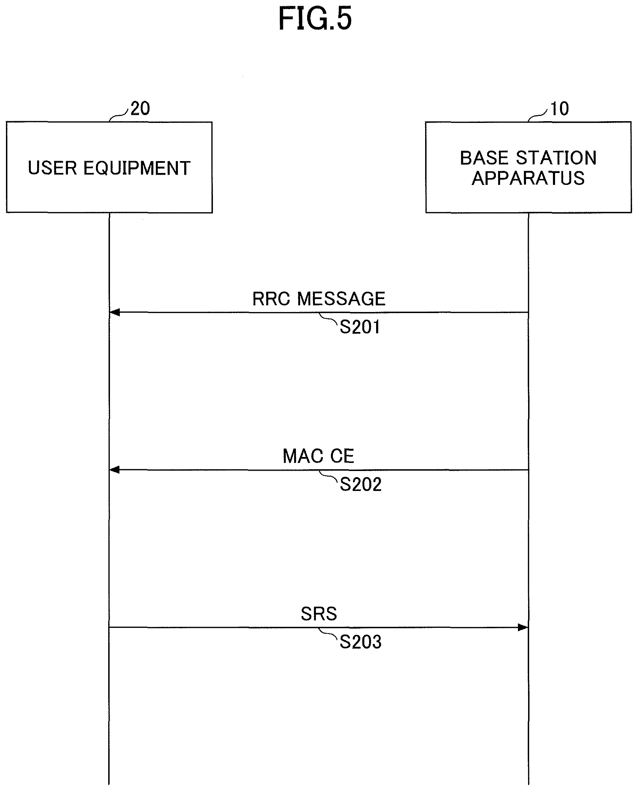

Next, Example 2 will be described. Fig. 5 is a sequence diagram for explaining an operation of the Example 2.

In S201, the base station apparatus 10 transmits an RRC message (a new RRC message not existing in the prior art) to the user equipment 20.

The RRC message of S201 configures one or more SRS resources for the user equipment 20 and configures spatial relation information which can be applied to each configured SRS resource by a list.

In S202, the base station apparatus 10 transmits a MAC CE (a novel MAC CE not in the prior art) to the user equipment 20. The MAC CE specifies specific spatial relation information in the list specified in S201 and a SRS resource to which the spatial relation information is applied.

In S203, the user equipment 20 transmits a SRS using a spatial domain transmission filter corresponding to the spatial relation information specified in S202.

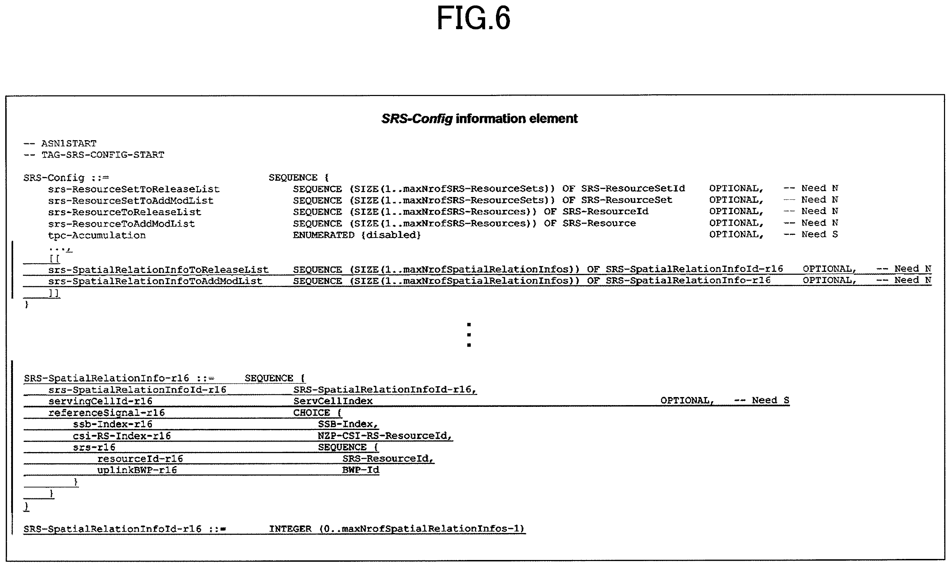

Fig. 6 shows an example of the specification in Example 2 (referred to as "TS38.331 modification example 1"). TS38.331 modification example 1 of Fig. 6 shows a change (underlined portions are added) from Non-Patent Document 3 (3GPP TS 38.331 V15.5.1).

As shown in Fig. 6, in the TS 38.331 modification example 1, spatial relation information is defined as common pool information applicable to all SRS resource sets and all SRS resources right under the SRS-Config.

In other words, in TS38.331 modification example 1, SRS-SpatialRelationInfo-r16s of the number of "maxNrofSpatialRelationInfos-1" are defined. In each SRS-SpatialRelationInfo-r16, a Serving Cell ID and a reference RS in the cell are specified. The number of "maxNrofSpatialRelationInfos-1" is not particularly limited, but is, for example, 8, 16, 32, etc.

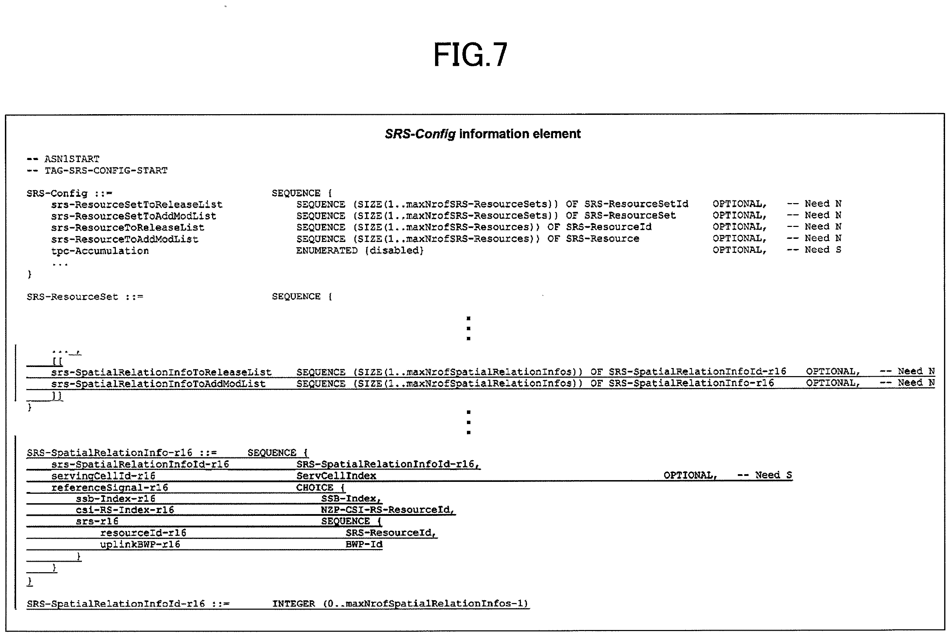

Fig. 7 shows a TS38.331 modification example 2 which is an example of the specification in Example 2. TS38.331 modification Example 2 of Fig. 7 shows a change (underlined portion is added) from Non-Patent Document 3 (3GPP TS 38.331 V15.5.1).

As shown in Fig. 7, in the TS38.331 modification example 2, a list of spatial relation information is set under the SRS resource set in the SRS config.

That is, in TS38.331 modification example 2, spatial relation information is defined as a spatial relation information list that is valid in the SRS resource set configured in the user equipment 20.

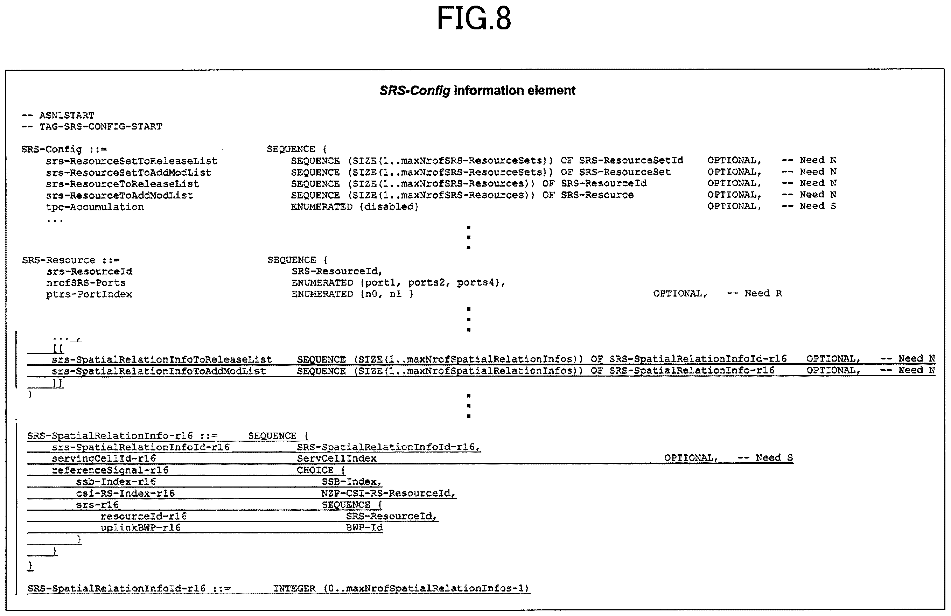

Fig. 8 shows a TS38.331 modification example 3, which is an example of the specification in Example 2. TS38.331 modification example 3 in Fig. 8 shows a change (underlined portions are added) from Non-Patent Document 3 (3GPP TS 38.331 V15.5.1) .

As shown in Fig. 8, in TS38.331 modification example 3, a list of spatial relation information is set under the SRS resource.

That is, in TS38.331 modification Example 3, spatial relation information is defined as a spatial relation information list which is valid in the SRS resource configured in the user equipment 20.

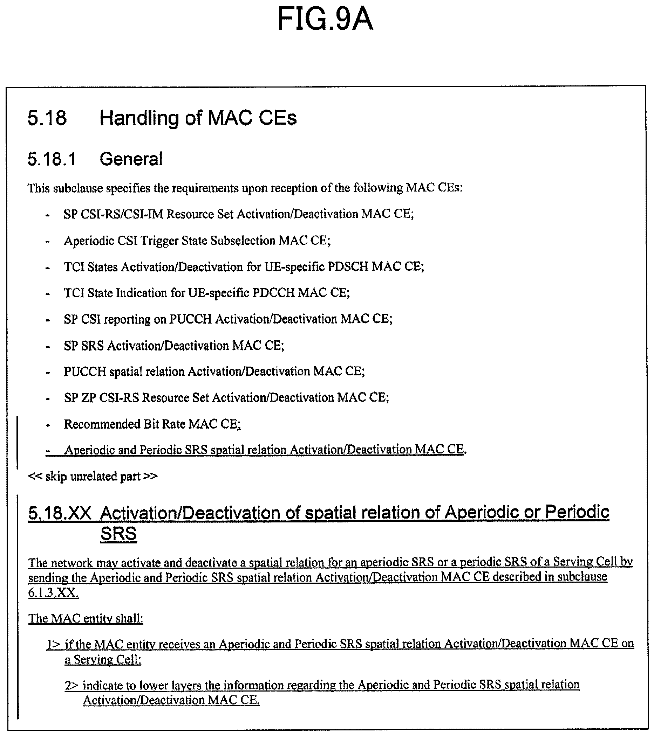

FIGS. 9A-9B show TS38.321 modification example 2, which is an example of the specification in Example 2. The TS38.321 modification example 2 of Figs. 9A-9B shows a change (underlined portions are added) from Non-Patent Document 2 (3GPP TS 38.321 V15.5.0) .

In the TS38.321 modification Example 2, spatial relation information can be activated or deactivated for a SRS resource ID from those configured in RRC. In this case, it does not depend on which usage (beam management, codebook, non-codebook, antenna switching) the SRS resource is used for.

More specifically, as shown in FIG. 9A, the MAC CE (Aperiodic and Periodic SRS Spatial Relationship Activation/Deactivation MAC CE) in Example 2 is also applicable to both Aperiodic SRS and Periodic SRS.

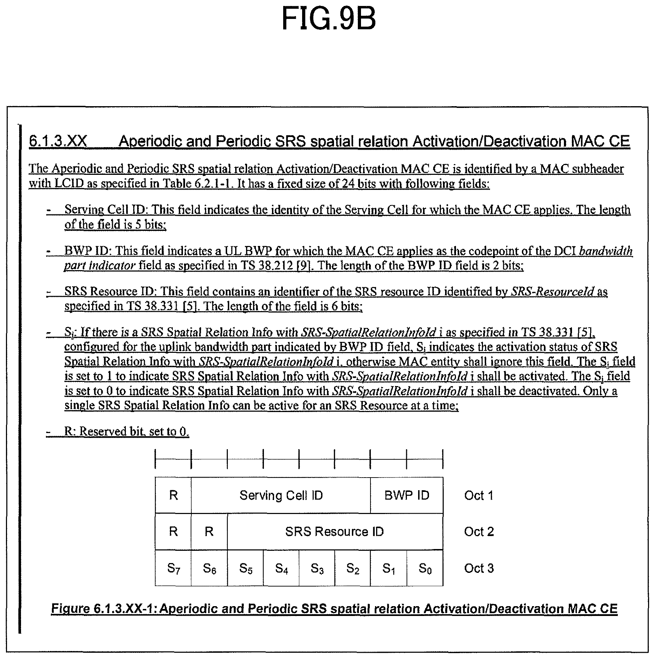

FIG. 9B shows a description of the MAC CE and each field in the MAC CE. The contents of each field are shown in Fig. 9B, but the main fields are outlined below.

As shown in FIG. 9B, the Serving Cell ID represents an ID of the serving cell to which this MAC CE is applied. The BWP ID indicates an ID of UL BWP ID to which this MAC CE applies. The SRS Resource ID is a SRS Resource ID identified by SRS-ResourceId.

Sᵢ indicates SRS-SpatialRelationInfoId in the list configured by RRC (TS38.331 modification examples 1-3). For example, if Sᵢ is 1, it means that spatial relation of SRS-SpatialRelationInfoId_i is activated, and if Sᵢ is 0, it means that spatial relation of SRS-SpatialRelationInfoId_i is deactivated.

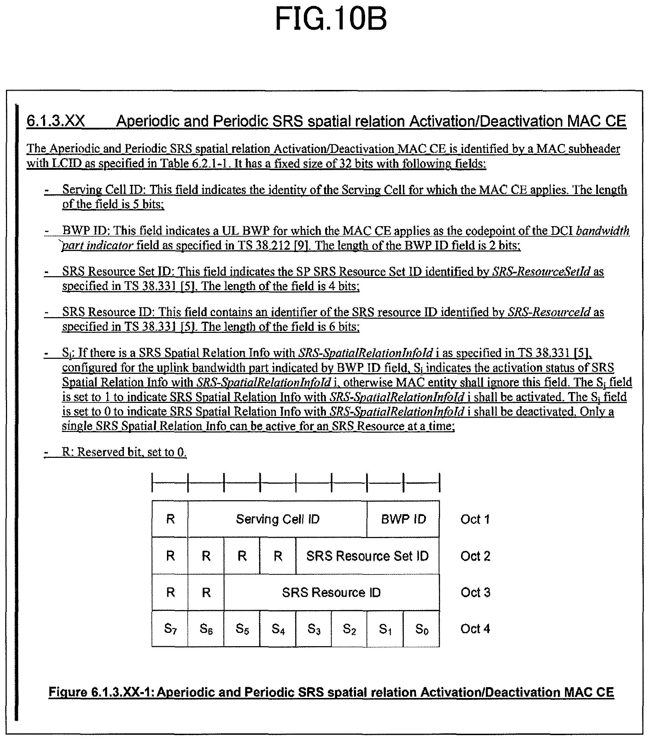

In the example of Fig. 9B, activation/deactivation is possible for eight spatial relations. However, 8 is only one example. For example, the number of spatial relations that can be activated/deactivated may be 16, 32, or any other number. The same applies to Fig. 10B, which will be described later.

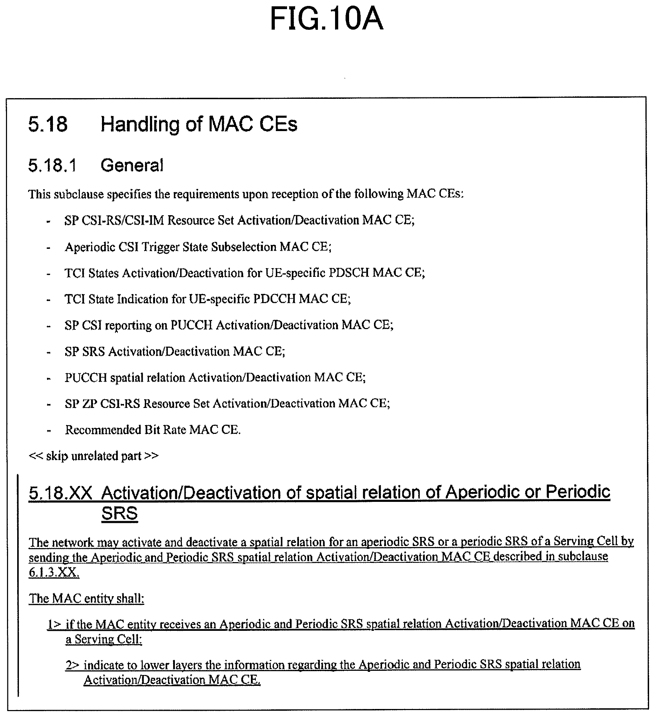

FIGS. 10A-10B show TS38.321 modification example 3, which is an example of the specification in Example 2. TS38.321 modification example 2 of FIGS. 10A-10B shows a change (underlined portions are added) from Non-Patent Document 2 (3GPP TS 38.321 V15.5.0).

In TS38.321 Modification Example 3, SRS resource set ID is added to the MAC CE of TS38.321 Modification Example 2 (Fig. 9B) as shown in Fig. 10B. In this case, since usage is configured for the SRS resource set specified by the SRS resource set ID by RRC, usage is specified in addition to the spatial relation information.

As described above, in the Example 2, the base station apparatus 10 transmits, to the user equipment 20, configuration information specifying one or more sounding reference signal resources and a list containing one or more pieces of spatial relation information applicable to the one or more sounding reference signal resources. The base station apparatus 10 also transmits to the user equipment 20 a MAC control element specifying a sounding reference signal resource and spatial relation information in the list applied to the sounding reference signal resource. The user equipment 20 receives these pieces of information and transmits a sounding reference signal using a spatial domain transmission filter corresponding to the spatial relation information.

As a matter common to Example 1 and Example 2, the new MAC CE used in Example 1 and Example 2 (and the spatial relation info list configured by RRC in Example 2) may be applied only to the aperiodic SRS or may be applied to the aperiodic SRS and the periodic SRS. Further, for semi-persistent SRS, the new MAC CE of Example 1 and Example 2 (and the spatial relation info list configured by RRC in Example 2) may be used instead of the MAC CE of Rel-15.

### (Effect)

With the technique of Example 1 and Example 2 described above, the spatial relation information of the SRS can be dynamically changed using the MAC CE. The ability to dynamically change the spatial relation information of the SRS enables a change that immediately reflects quality of radio.

Further, by changing the spatial relation of the SRS, the UL beam by which the user equipment 20 transmits PUSCH can be changed, so that the UL beam by which the PUSCH is transmitted can be dynamically changed depending on the quality of radio.

### (Equipment configuration)

Next, a functional configuration example of the base station apparatus 10 and the user equipment 20 that perform the processes and operations described above will be described. The base station apparatus 10 and the user equipment 20 include functions for implementing the above-described Examples 1 and 2. However, the base station apparatus 10 and the user equipment 20 may each comprise only one of the functions of Example 1 and Example 2.

### <Base Station Equipment 10>

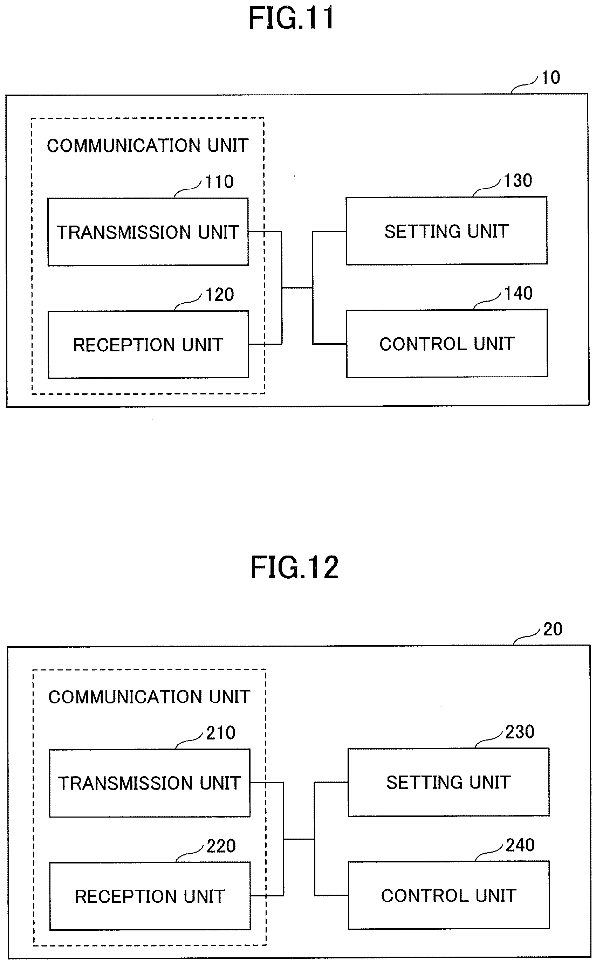

Fig. 11 is a diagram illustrating an example of a functional configuration of the base station apparatus 10. As shown in Fig. 11, the Base station apparatus 10 includes a transmission unit 110, a reception unit 120, a setting unit 130, and a control unit 140. The functional configuration shown in FIG. 11 is only one example. As long as the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user equipment 20 side and transmitting the signal wirelessly. The receiving unit 120 includes a function for receiving various signals transmitted from the user equipment 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user equipment 20.

The setting unit 130 stores preconfigured configuration information and various configuration information to be transmitted to the user equipment 20 in a storage device provided by the setting unit 130 and reads the preconfigured configuration information from the storage device as necessary. The contents of the configuration information include, for example, communication configuration related to the scheduling of the user equipment 20, the UE capability, configuration information related to the SRS, etc.

The control unit 140 schedules DL reception or UL transmission of the user equipment 20 through the transmission unit 110. A function unit related to signal transmission in the control unit 140 may be included in the transmission unit 110, and a function unit related to signal reception in the control unit 140 may be included in the receiving unit 120. The transmission unit 110 may be called a transmitter, and the receiving unit 120 may be called a receiver.

For example, the transmission unit 110 transmits the configuration information specifying one or more sounding reference signal resources to a terminal and transmits the MAC control element specifying spatial relation information for the one or more sounding reference signal resources to the terminal.

For example, the transmission unit 110 transmits to the terminal configuration information specifying one or more sounding reference signal resources and a list including one or more spatial relation information applicable to the one or more sounding reference signal resources, and transmits to the terminal a MAC control element specifying a sounding reference signal resource and spatial relation information in the list applied to the sounding reference signal resource.

### <User equipment 20>

Fig. 12 is a diagram illustrating an example of a functional configuration of a user equipment 20. As shown in FIG. 12, the user equipment 20 includes a transmission unit 210, a reception unit 220, a setting unit 230, and a control unit 240. The functional configuration shown in FIG. 12 is only one example. As long as the operation according to the embodiments of the present invention can be performed, the functional category and the name of the functional unit may be any one. The transmission unit 210 and the reception unit 220 may be collectively referred to as a communication unit.

The transmission unit 210 creates a transmission signal from transmission data and wirelessly transmits the transmission signal. The receiving unit 220 receives various signals wirelessly and acquires signals from higher layers from the received signal of the physical layer. The receiving unit 220 has a function to receive NR-PSS, NR-SSS, NR-PBCH, and DL/UL/SL control signals, DCI by PDCCH, data by PDSCH, and the like, transmitted from the base station apparatus 10. For example, the transmitting unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user equipment 20 as D2D communication, and the receiving unit 120 may receive PSCCH, PSSCCH, PSDCH, PSDCH, or PSBCH, etc. from another user equipment 20.

The setting unit 230 stores various configuration information received from the base station apparatus 10 or the user equipment 20 by the receiving unit 220 in the storage device provided by the setting unit 230 and reads it from the storage device as necessary. The setting unit 230 also stores the preconfigured configuration information. The contents of the configuration information are, for example, UE capability, configuration information related to SRS, etc.

The control unit 240 performs control of the user equipment 20. A function unit related to signal transmission in the control unit 240 may be included in the transmission unit 210, and a function unit related to signal reception in the control unit 240 may be included in the receiving unit 220. The transmission unit 210 may be referred to as a transmitter, and the receiving unit 220 may be referred to as a receiver.

For example, the receiving unit 220 receives configuration information specifying one or more sounding reference signal resources from the base station apparatus and receives a MAC control element specifying spatial relation information for the one or more sounding reference signal resources from the base station apparatus. The transmitting unit 210 transmits a sounding reference signal using a spatial domain transmission filter corresponding to the spatial relation information.

For example, the receiving unit 220 receives from the base station apparatus configuration information specifying one or more sounding reference signal resources and a list including one or more spatial relation information applicable to the one or more sounding reference signal resources, and receives from the base station apparatus a MAC control element specifying a sounding reference signal resource and spatial relationship information in the list applied to the sounding reference signal resource. The transmitting unit 210 transmits a sounding reference signal using a spatial domain transmission filter corresponding to the spatial relation information.

### <Hardware configuration>

The block diagrams (FIGs. 11 and 12) used for explaining the above embodiment illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

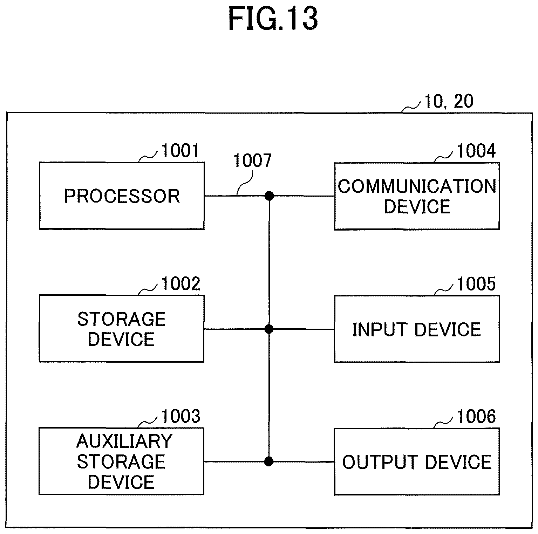

For example, the base station apparatus 10, the user equipment 20, and the like according to one embodiment of the present disclosure may function as a computer that performs processing of a wireless communication according to the present disclosure. FIG. 13 is a drawing illustrating an example of a hardware configuration of the base station apparatus 10 or the user equipment 20 according to an embodiment of the present disclosure. Each of the base station apparatus 10 and user equipment 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station apparatus 10 and the user equipment 20 may be configured to include one or more of the devices illustrated in drawings, or may be configured not to include some of the devices.

Each function of the base station apparatus 10 and the user equipment 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station apparatus 10, as illustrated in FIG. 12, may be implemented by a control program that is stored in the storage device 1002 and that is executed by the processor 1001. Also, for example, the control unit 240 of the user equipment 20, as illustrated in FIG. 13, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips . It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The auxiliary storage device 1003 may be referred to as an auxiliary storage device. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel) .

The devices, such as the processor 1001 and the storage device 1002, are connected to each other via a bus 1007 for communicating information. The bus 1007 may be constituted by using a single bus, or may be constituted by using busses different depending on devices.

The base station apparatus 10 and the user equipment 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware . For example, the processor 1001 may be implemented with at least one of these hardware components.

### (Summary of Embodiments)

According to the present embodiment, at least a base station apparatus, a terminals, and a transmission method shown in the following items 1 to 6 are provided.

### (Item 1)

A base station apparatus comprising:
a transmission unit configured to transmit, to a terminal, configuration information designating one or more sounding reference signal resources,
wherein the transmission unit transmits, to the terminal, a MAC control element designating spatial relation information for the one or more sounding reference signal resources.

### (Item 2)

A base station apparatus comprising:
a transmission unit configured to transmit, to a terminal, configuration information designating one or more sounding reference signal resources and a list including one or more pieces of spatial relation information applicable to the one or more sounding reference signal resources,
wherein the transmission unit transmits, to the terminal, a MAC control element designating a sounding reference signal resource and spatial relation information, in the list, that is applied to the sounding reference signal resource.

### (Item 3)

The base station apparatus as described in item 2, wherein the MAC control element designates a sounding reference signal resource set in addition to the sounding reference signal resource and the spatial relation information in the list.

### (Item 4)

A terminal comprising:
a reception unit configured to receive, from a base station apparatus, configuration information designating one or more sounding reference signal resources, and receive from the base station apparatus, a MAC control element designating spatial relation information for the one or more sounding reference signal resources; and
a transmission unit configured to transmit a sounding reference signal using a spatial domain transmission filter corresponding to the spatial relation information.

### (Item 5)

A terminal comprising:
a reception unit configured to receive, from a base station apparatus, configuration information designating one or more sounding reference signal resources and a list including one or more pieces of spatial relation information applicable to the one or more sounding reference signal resources, and receive, from the base station apparatus, a MAC control element designating a sounding reference signal resource and spatial relation information, in the list, that is applied to the sounding reference signal resource; and
a transmission unit configured to transmit a sounding reference signal using a spatial domain transmission filter corresponding to the spatial relation information.

### (Item 6)

A transmission method executed by a base station apparatus comprising:
transmitting, to a terminal, configuration information designating one or more sounding reference signal resources; and
transmitting, to the terminal, a MAC control element designating spatial relation information for the one or more sounding reference signal resources.

Any of the configurations described in items 1-6 provide a technique that allows the terminal to dynamically specify a spatial relation of the sounding reference signal. In particular, according to items 2, 3, and 5, the amount of information in the MAC control element can be reduced by specifying the spatial relation information in the configured list. In addition, according to item 3, spatial relation information can be specified in consideration of the usage.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station apparatus 10 and the user equipment 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user equipment 20 can be performed by at least one of the base station apparatus 10 and another network node other than the base station apparatus 10 (for example, a MME, a S-GW, or the like may be mentioned, but not limited thereto). In the above, the description has been made for the case where another network node other than the base station apparatus 10 is a single node as an example. But the another network node may be a combination of a plurality of other network nodes (for example, a MME and a S-GW) .

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling) . A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUSCH, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type) . It is noted that at least one of a base station and a mobile station includes an apparatus that does not necessarily move during a communication operation. For example, at least one of a base station and a mobile station may be an IoT (Internet of Thing) device such as a sensor.

In addition, a base station apparatus according to the present disclosure may be read as a user equipment. For example, each aspect or embodiment of the present disclosure may be applied to a configuration in which communication between a base station apparatus and a user equipment is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station apparatus. In this case, a base station apparatus may have above-described functions of the user terminal.

The term "determine" used herein may mean various operations . For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots . Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like. One slot may be called unit time. Unit time may be different for each cell according to the numerology.

A TTI means, for example, a minimum time unit of scheduling in radio communication. For example, in an LTE system, a base station performs scheduling for each user equipment 20 to assign, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other". Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, the transmission unit 210 and the reception unit 220 are examples of communication units. The transmission unit 110 and the reception unit 120 are examples of communication units. UECpability Enquiry is an example of a first RRC message that queries the capabilities of a user equipment. UECpability Information is an example of a second RRC message reporting UE capabilities.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### [Description of Symbols]

- 10: base station apparatus
- 110: transmitting unit
- 120: receiving unit
- 130: configuring unit
- 140: control unit
- 20: user equipment
- 210: transmitting unit
- 220: receiving unit
- 230: configuring unit
- 240: control unit
- 1001: processor
- 1002: storage device
- 1003: auxiliary storage device
- 1004: communication device
- 1005: input device
- 1006: output device

## Claims

1. A base station apparatus comprising:
a transmission unit configured to transmit, to a terminal, configuration information designating one or more sounding reference signal resources,
wherein the transmission unit transmits, to the terminal, a MAC control element designating spatial relation information for the one or more sounding reference signal resources.

2. A base station apparatus comprising:
a transmission unit configured to transmit, to a terminal, configuration information designating one or more sounding reference signal resources and a list including one or more pieces of spatial relation information applicable to the one or more sounding reference signal resources,
wherein the transmission unit transmits, to the terminal, a MAC control element designating a sounding reference signal resource and spatial relation information, in the list, that is applied to the sounding reference signal resource.

3. The base station apparatus as claimed in claim 2, wherein the MAC control element designates a sounding reference signal resource set in addition to the sounding reference signal resource and the spatial relation information in the list.

4. A terminal comprising:
a reception unit configured to receive, from a base station apparatus, configuration information designating one or more sounding reference signal resources, and receive from the base station apparatus, a MAC control element designating spatial relation information for the one or more sounding reference signal resources; and
a transmission unit configured to transmit a sounding reference signal using a spatial domain transmission filter corresponding to the spatial relation information.

5. A terminal comprising:
a reception unit configured to receive, from a base station apparatus, configuration information designating one or more sounding reference signal resources and a list including one or more pieces of spatial relation information applicable to the one or more sounding reference signal resources, and receive, from the base station apparatus, a MAC control element designating a sounding reference signal resource and spatial relation information, in the list, that is applied to the sounding reference signal resource; and
a transmission unit configured to transmit a sounding reference signal using a spatial domain transmission filter corresponding to the spatial relation information.

6. A transmission method executed by a base station apparatus comprising:
transmitting, to a terminal, configuration information designating one or more sounding reference signal resources; and
transmitting, to the terminal, a MAC control element designating spatial relation information for the one or more sounding reference signal resources.
